# EUROPÄISCHE PATENTSCHRIFT

(11) **EP 0 249 795 B1**
(45) Veröffentlichungstag und Bekanntmachung des Hinweises auf die Patenterteilung: **31.08.1994**
(21) Anmeldenummer: 87107983.6
(22) Anmeldetag: 02.06.1987
(51) Int. Cl.: H04Q 3/62, H04M 3/38, H04Q 3/545

(54) **Verfahren für ein Kommunikationssystem, insbesondere für ein Fernsprechnebenstellensystem, bei dem zeitweise eine Umschaltung auf geänderte Verkehrsmöglichkeiten erfolgt**
Method for a communication system, especially for a private telephone system, in which at times a switching to changed traffic possibilities occurs
Méthode pour un système de communication, en particulier pour un système téléphonique privé dans lequel de temps en temps une commutation vers des possibilités de trafic modifiées a lieu

(30) Priorität: 20.06.1986 DE 3620605
(43) Veröffentlichungstag der Anmeldung: 23.12.1987
(73) Patentinhaber: SIEMENS AKTIENGESELLSCHAFT, 80333 München (DE)
(72) Erfinder: Muyssen, John, Dipl.-Ing., B-9050 Evergem (BE)

(56) Entgegenhaltungen:
- DE-A- 2 830 282
- US-A- 4 486 626
- PATENT ABSTRACTS OF JAPAN, Band 10, Nr. 137 (E-405)[2194], 21. Mai 1986; & JP-A-61 1155 (MATSUSHITA DENKI SANGYO K.K.) 07-01-1986
- PATENT ABSTRACTS OF JAPAN, Band 7, Nr. 52 (E-162)[1197], 2. März 1983; & JP-A-57 201 361 (NIPPON DENKI K.K.) 09-12-1982

## Beschreibung

Die Erfindung betrifft ein Verfahren für ein Kommunikationssystem, insbesondere für ein Fernsprechnebenstellensystem, das von einer Steuereinrichtung gesteuert wird, die Zugriff zu Speicheranteilen hat, in denen die Programm-und Steuerdateninformationen abgelegt sind, wobei jeweils für einen bestimmten Zeitraum bestimmte Berechtigungen in den Verkehrsmöglichkeiten für die Teilnehmerendeinrichtungen gegebenenfalls mit einzelnen wenigen Ausnahmen vermittels einer zentral bewirkten Steuerinformation unwirksam geschaltet werden.

In Fernsprechnebenstellensystemen kann jeweils für einen bestimmten Zeitraum, wie z. B. in der betriebsfreien Zeit, durch eine zentrale Umschaltung die den einzelnen Teilnehmerstellen jeweils zugeordneten Berechtigungen in der Weise geändert werden, daß vom Umschaltezeitpunkt an nur noch niederwertige Berechtigungen gültig sind. So können beispielsweise generell die Amts- und höherwertigen Berechtigungen für abgehend aufzubauende Gesprächsverbindungen unwirksam werden. Von einer solchen Berechtigungsumschaltung können einzelne Teilnehmerendeinrichtungen, die aus bestimmten Gründen normal betriebsbereit zu halten sind, ausgenommen werden. In der Regel besteht für diese dann eine andersartige Sicherung gegenüber einer unbefugten Benutzung. Die zentrale Umschaltung auf die niederwertige Berechtigung, z. B. die Halbamtsberechtigung für die Teilnehmerstellen, kann durch die Betätigung einer entsprechenden Taste am Vermittlungsfernsprecher oder auch automatisch über einem von einer Uhr betätigten Kontakt erfolgen.

Durch die deutsche Offenlegungsschrift DE-A-2 830 282 ist es bekannt, in einem Kommunikationssystem von vornherein die Gültigkeit von Berechtigungen auf einen bestimmten Zeitraum zu beschränken. In diesem Zusammenhang folgt keine generelle Beschränkung für die angeschlossenen Teilnehmer, sondern es liegt jeweils im Ermessen des jeweiligen Teilnehmers, eine Beschränkung in den Berechtigungen für das betreffende Endgerät vorzunehmen. Wird keine solche teilnehmerindividuelle Eingabe zu einer solchen Beschränkung vorgenommen, so sind die jeweiligen Endgeräte für eine unbefugte Nutzung verfügbar.

Es ist die Aufgabe der Erfindung in Zusammenhang mit einer Berechtigungsumschaltung die Betriebsmöglichkeiten zu verbessern.

Dies wird dadurch erreicht, daß diese Beschränkung auf eine einheitliche niedrige Berechtigung durch eine zentral veranlaßte Steuerinformation mit Beginn des betreffenden Zeitraums gegebenenfalls mit einzelnen wenigen Ausnahmen, für alle übrigen Teilnehmerendeinrichtungen bewirkt und mit Ende dieses Zeitraums wieder rückgängig gemacht wird, daß mittels einer an der Fernsprechendeinrichtung durch einen Teilnehmer einzuwählende Kenninformation zumindest für eine einzige abgehend aufzubauende Gesprächsverbindung die ursprünglich für diese Endeinrichtung vorhandenen Berechtigungen wiederhergestellt werden bzw. eine von dieser urprünglichen Berechtigung abweichende und gegenüber der mit der erfolgten Beschränkung festgelegten reduzierten Berechtigung höherwertige Berechtigung dafür freigegeben wird. Es wird also erfindungsgemäß in der Regel generell für sämtliche an die Kommunikationsanlage angeschlossenen Endgeräte eine Beschränkung in der Berechtigung der jeweiligen Teilnehmerstellen für einen bestimmten Zeitraum vorgenommen. Dies kann beispielsweise der Zeitraum zwischen Betriebsschluß und Betriebsbeginn am nächsten Tag sein. Diese Rückstufung in der Berechtigung beispielsweise auf "nicht amtsberechtigt", kann durch die Veranlassung eines Teilnehmers für das ihm zugeordnete Endgerät aufgrund einer eingewählten Codenummer geändert werden. Es kann festgelegt sein, daß eine solche Änderung nur für eine bestimmte Anzahl von Gesprächsverbindungen, im Grenzfall nur für eine einzige Gesprächsverbindung, möglich ist. Danach gilt in jedem Fall dann die beschränkte Berechtigung. Diese Änderungsmöglichkeit in der Berechtigung nach einer generellen Rückstufung kann für einzelne Teilnehmer unterschiedlich geregelt sein. Durch die Eingabe einer Codenummer kann die ursprünglich zugeteilte Berechtigung wieder hergestellt werden oder es kann auch lediglich eine gegenüber dieser vorgenommenen Beschränkung höherwertige Berechtigung freigegeben werden. Erfindungsgemäß kann die Rückstufung in der Berechtigung während des hierfür vorgegebenen Zeitraums bei Bedarf über eine entsprechende Codenummer durch einen Teilnehmer individuell durchbrochen werden. Um sicherzustellen, daß eine derartige Durchbrechung nicht in unbefugter Weise vorgenommen werden kann, ist gemäß einer Weiterbildung der Erfindung zur Erhöhung dieser Sicherheit neben der Einwahl einer allgemeinen Codenummer zusätzlich die Einwahl eines individuellen Schlüsselwortes vorgesehen. Die Rückstufung in der Berechtigung wird durch eine zentral gesteuerte Schaltung bewirkt. Weiterhin ist die für eine bestimmte Anzahl von abgehenden Gesprächen mögliche Durchbrechung der vorgenommenen Einschränkung in den Berechtigungen nur innerhalb des festgelegten Zeitraums zugelassen. Nach Beendigung dieses Zeitraums erfolgt die zentrale Umschaltung auf die ursprünglich vorhandenen Berechtigungen. Bei Verwendung einer zusätzlichen, für jeden Teilnehmer individuell zugeteilten und für den notwendigen Vergleich entsprechend abgespeicherten Kennzahl wird eine mißbräuchliche Benutzung zusätzlich erschwert, da die Berechtigung für abgehende Gesprächsverbindungen oder für noch höherwertige Verbindunggen nur für solche Teilnehmer besteht, die sich durch die Nachwahl einer persönlichen Codenummer als hierfür berechtigt ausweisen.

Bei der Durchbrechung der zentral gesteuerten Umschaltung kann entweder der ursprüngliche Berechtigungsumfang erneut wiederhergestellt werden oder es können andere in der Regel demgegenüber eingeschränkte Berechtigungen wirksam werden. Der betreffende Speicherabschnitt des Berechtigungsspeichers wird dann teilnehmerbezogen durch die eingewählte Kenninformation ausgewählt und die darin von dem jeweiligen Vermittlungszustand enthaltene Berechtigung freigegeben.

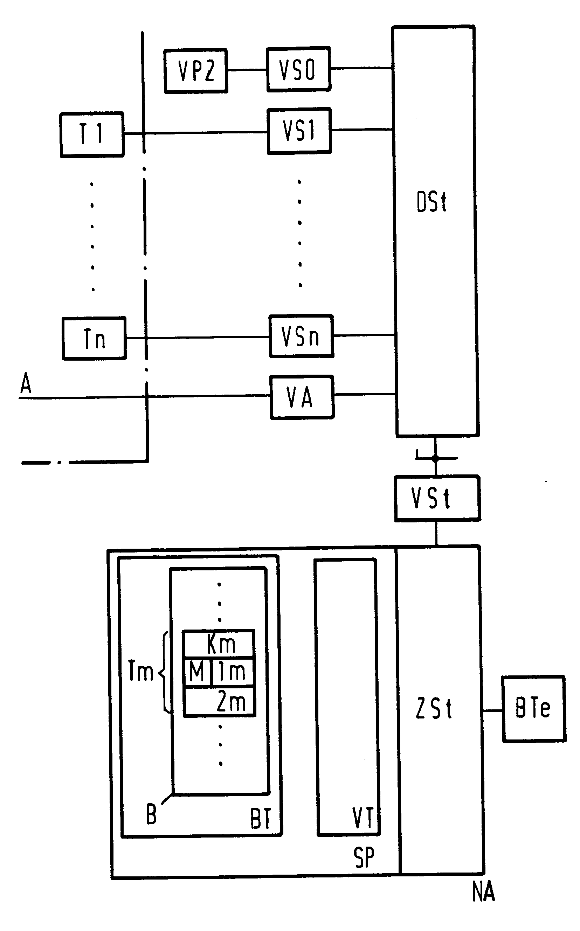

Das erfindungsgemäße Verfahren wird anhand eines in der Figur dargestellten Ausführungsbeispiels, das nur die zum Verständnis erforderlichen Einzelheiten enthält, erläutert. In einem stark vereinfachten Blockschaltbild sind Teile einer Fernsprechnebenstellenanlage NA dargestellt, die beispielsweise eine rechnergesteuerte speicherprogrammierte Vermittlungsanlage sein kann. Die zentrale Steuereinrichtung ZSt steuert im wesentlichen die für die einzelnen Betriebsmöglichkeiten der Anlage erforderlichen Abläufe. Dabei greift sie auf entsprechende Programmteile zurück, die in der ihr zugeordneten Speichereinrichtung SP abgespeichert sind. Mit VSt ist eine Verteilersteuerung und mit DSt eine dezentrale Steuerung, der jeweils eine bestimmte Anzahl von Einrichtungen, wie beispielsweise Teilnehmerstellen, zugeordnet sind, bezeichnet. Unter der Voraussetzung eines digitalen Vermittlungssystems ist diese dezentrale Teilsteuerung funktionsmäßig ein rechnergesteuerter Speicherbereich, in dem die digitalen Sprachsignale eingespeichert und zum jeweiligen Verbindungspartner ausgelesen werden. Sie stellt also das digitale Koppelnetz dar. Die Einheit VSt ist eine spezielle Verteiler- und Anpassungssteuerung, um mehrere dezentrale Teilsteuerungen, an die jeweils Sätze angekoppelt sind, bedienen zu können. Mit VPL ist der Vermittlungsplatz bezeichnet, der über den Satz VSO an die Steuerung DSt angekoppelt ist. Die Anschaltung der Teilnehmerstellen T1...Tn erfolgt jeweils über einen Verbindungssatz, im Ausführungsbeispiel über Verbindungssätze VS1...VSn. Jedem der möglichen Amtsleitungsbündel A ist ein Vermittlungssatz VA zugeordnet. Die insgesamt dargestellten Vermittlungssätze können als aktive Sätze ausgebildet sein, die einen Vorverarbeitungsprozessor beinhalten. Bezogen auf einen Teilnehmersatz wird dann durch diesen z. B. eine Vorverarbeitung der Informationen, die von den im Teilnehmersatz enthaltenen Indikationsstellen geliefert werden, durchgeführt. Die Schnittstelle zwischen den Sätzen und der Einheit DSt ist mehradrig, wobei sie im digitalen System für digitale Sprachsignale und für Steuersignale durchgängig ist.

Der zentralen Steuereinrichtung ZSt sind mehrere unterschiedliche Speichereinheiten der Speichereinrichtung SP zugänglich, die als veränderbare oder als nicht veränderbare Speicher sowohl die für die Abwicklung von vermittlungstechnischen Abläufen als auch die für die Abwicklung von anderen, z. B. von betriebstechnischen Vorgängen notwendigen Programme enthalten. In den veränderbaren Speichereinheiten werden die jeweiligen Zustandsinformationen zwischengespeichert. In den nicht veränderbaren Speichern sind diejenigen Informationen enthalten, die den grundsätzlichen Verfahrensablauf in der Anlage festlegen. So sollen beispielsweise in der Speichereinheit VT die vermittlungstechnischen Informationen, die also u. a. die Herstellung und die Auslösung von Sprechverbindungen und gegebenenfalls von Datenverbindungen betreffen, abgespeichert sein. Es sind also darin die zur Realisierung der logischen Verknüpfungen und der Abläufe notwendigen Programmfolgen enthalten. Es werden Kurzzeitdaten, die z. B. den Zustand der Verbindungswege, den Schleifenschluß der Teilnehmeranschlußleitung, die gewählten Ziffern oder Gebühreninformationen betreffen, übernommen. Als Eingangsdaten werden u. a. die Zustandsdaten der einzelnen Sprechstellen übermittelt. Durch den vorgenommenen Vergleich dieser neuen Daten mit den zuletzt abgespeicherten Daten werden Zustandsänderungen erkannt und demzufolge die solchen Änderungen zugeordneten Abläufe aufgerufen.

Die Speichereinheit BT soll die für die betriebstechnischen Vorgänge notwendigen Informationen enthalten. In ihr sind z. B. die veränderbaren Kundendaten-Informationen und diejenigen Informationen abgespeichert, die Dienste und Sonderfunktionen der Fernsprechnebenstellenanlage betreffen. Aufgrund der betriebstechnischen Informationen wird die Anlage NA vor ihrer Einschaltung bzw. während des bereits bestehenden Betriebes in einer bestimmten Weise hinsichtlich des Verfahrensablaufes bzw. hinsichtlich der Dienste und Zusatzfunktionen eingerichtet bzw. verändert. Dies betrifft beispielsweise die Zuteilung von Berechtigungen sowie die Zuteilung von Kennzahlen, die für die Einleitung bestimmter Funktionsabläufe einzuwählen sind. In einem Speicheranteil B der Speichereinheit BT sollen nun - bezogen auf jede Teilnehmerstelle T1...Tn - die ihnen jeweils durch eine über das Terminal BTe erfolgte betriebstechnische Eingabe zugeordneten Berechtigungen abgespeichert sein. Diese Berechtigungen betreffen die einzelnen Zugangsmöglichkeiten zu den vorhandenen Externleitungsbündeln und die einzelnen Berechtigungen für die Inanspruchnahme der in der Anlage vorgesehenen Leistungsmerkmale.

Für die Fernsprechnebenstellenanlage kann vorgesehen sein, daß mit Beginn der betriebsfreien Zeit eine zentral gesteuerte Berechtigungsumschaltung erfolgt. Mit dieser Umschaltung, die durch die Betätigung einer zentralen Taste am vorhandenen Vermittlungsfernsprecher oder durch einen zu der gewünschten Zeit betätigten Uhrenkontakt eingeleitet werden kann, wird für die einzelnen Teilnehmerstellen generell eine andere Gesprächsberechtigung wirksam. Es kann z. B. für alle Teilnehmerstellen mit dieser Umschaltung festgelegt werden, daß sie nicht amtsberechtigt sind. Die Tatsache, daß die ursprünglich einer Teilnehmerstelle zugeteilten Berechtigungen nicht mehr wirksam sind, kann beispielsweise durch ein entsprechendes Merkbit M festgelegt sein. Damit können die für eine Teilnehmerstelle Tm in dem im zugeordneten Abschnitt 1m enthaltenen Berechtigungen nicht mehr in Anspruch genommen werden. Es besteht nun die Möglichkeit, teilnehmerindividuell die mit der Umschaltung festgelegte niedrigere Berechtigungsstufe zu durchbrechen. Dies erfolgt durch die Einwahl einer festgelegten Kenninformation. Es können hierbei beispielsweise zwei Sicherheitsstufen bestehen. Bei einer für alle Teilnehmer in gleicher Weise geltenden Kennzahl besteht eine geringere Sicherheit gegenüber einer mißbräuchlichen Benutzung als in den Fällen, in denen eine jedem Teilnehmer individuell zugeteilte Kennziffer einzuwählen ist. Diese dem Teilnehmer individuell zugeordnete Kennziffer ist jeweils für jeden Teilnehmer in dem ihm zugeordneten Abschnitt Km abgespeichert. Wird bei dem entsprechenden Vergleich dieser abgespeicherten individuell zugeteilten Kennzahl und der tatsächlich eingewählten Kennzahl eine Übereinstimmung festgestellt, so wird trotz der erfolgten Umschaltung eine höherwertige Berechtigung für die Führung eines externen Gespräches freigegeben. Zu diesem Zweck kann beispielsweise die ursprünglich der betreffenden Teilnehmerstelle zugeordneten Berechtigungen dadurch wieder hergestellt werden, daß - bezogen auf den jeweiligen Teilnehmer - bei Übereinstimmung der eingewählten und der abgespeicherten Kenninformationen das mit der zentral gesteuerten Umschaltung gesetzte Merkbit bis zum Ende der nachfolgend aufzubauenden Gesprächsverbindung gelöscht wird. Es kann auch festgelegt sein, daß für die Gesprächsverbindungen in der betriebsfreien Zeit nicht die ursprünglich zugeteilten Berechtigungen, sondern andere, in der Regel niederwertigere Berechtigungen gültig sein sollen. Diese Berechtigungen können vermittels der betriebstechnischen Eingaben teilnehmerindividuell in einem weiteren Speicherabschnitt 2m abgelegt sein. Bei Übereinstimmung der bei der Teilnehmerstelle Tm eingewählten Kennzahl mit der für sie abgespeicherten Kennzahl Km wird also im Zusammenhang mit der möglichen Durchbrechung der Umschaltung der Speicherabschnitt 2m abgefragt. Damit wird festgestellt, ob die gewünschte Gesprächsverbindung, die Belegung eines bestimmten weiterführenden Leitungsbündels oder ein gewünschtes Leistungsmerkmal zulässig ist.

Es kann festgelegt sein, daß die Durchbrechung der zentral gesteuerten Umschaltung von einer Teilnehmerstelle aus für eine bestimmte Anzahl von Gesprächsverbindungen erfolgen kann. Wird diese Anzahl von Gesprächen erreicht, so bleiben die mit der Umschaltung vorgegebenen Berechtigungen bestehen. Trotz der zentral gesteuerten Berechtigungsumschaltung, mit der also beispielsweise die Teilnehmerstellen generell auf nichtamtsberechtigt geschaltet werden, wird ein abgehender externer Telefonverkehr für unbefugte Personen unterbunden, für berechtigte Mitarbeiter ist hingegen die Möglichkeit für den Aufbau von externen Gesprächsverbindungen gegeben.

### Bezugszeichenliste

- A: Amtsleitungsbündel
- B: Speicherteil
- BTe: Betriebsterminal
- BT: Speichereinheit
- DSt: dezentrale Steuerung
- M: Merkbit
- Km: Speicherabschnitt für Kennzahl
- 1m, 2m: Speicherabschnitt
- NA: Fernsprechnebenstellenanlage
- SP: Speichereinrichtung
- T1-Tn: Teilnehmerstelle
- VPL: Vermittlungsplatz
- VSQ-VSn: Verbindungssatz
- VA: Vermittlungssatz
- VT: Speichereinheit
- VSt: Verteilersteuerung
- ZSt: zentrale Steuereinrichtung

## Patentansprüche

1. Verfahren für ein Kommunikationssystem, insbesondere für ein Fernsprechnebenstellensystem (NA), das von einer Steuereinrichtung (ZSt) gesteuert wird, die Zugriff zu Speicheranteilen (BT, VT) hat, in denen die Programm- und Steuerdateninformationen abgelegt sind, wobei jeweils für einen bestimmten Zeitraum eine Beschränkung in der Berechtigung in den Verkehrsmöglichkeiten für eine Teilnehmerendeinrichtung (T1...Tn) vornehmbar ist,
**dadurch gekennzeichnet**,
daß diese Beschränkung auf eine einheitliche niedrigere Berechtigung (2m), durch eine zentral veranlaßte Steuerinformation mit Beginn des betreffenden Zeitraumes gebenenfalls mit einzelnen wenigen Ausnahmen, für alle übrigen Teilnehmerendeinrichtungen bewirkt und mit Ende dieses Zeitraumes wieder rückgängig gemacht wird, daß vermittels einer an der Fernsprechendeinrichtung durch einen Teilnehmer einzuwählende Kenninformation (Km) zumindest für eine einzige abgehend aufzubauende Gesprächsverbindung die ursprünglich für diese Endeinrichtungen vorhandenen Berechtigungen (1m) wiederhergestellt werden bzw. eine von dieser ursprünglichen Berechtigung abweichende und gegenüber der mit der erfolgten Beschränkung festgelegten reduzierten Berechtigung (2m) höherwertige Berechtigung dafür freigegeben wird.

2. Verfahren nach Anspruch 1,
**dadurch gekennzeichnet**,
daß als Kenninformation eine für die betreffenden Teilnehmer in gleicher Weise maßgebende allgemeine Kennzahl und/oder eine für jeden Teilnehmer individuell zugeteilte und für den notwendigen Vergleich entsprechend abgespeicherte Kennzahl (Km) dient.

3. Verfahren nach Anspruch 1 bzw. 2,
**dadurch gekennzeichnet**,
daß nach einer vorgegebenen Anzahl von Gesprächsverbindungen auch bei Einwahl der Kenninformation die mit der zentralen Berechtigungsumschaltung vorgegebenen Berechtigungen (2m) bestehen bleiben.

4. Verfahren nach Anspruch 1 bzw. 2,
**dadurch gekennzeichnet**,
daß in den Fällen, in denen nach der zentralen Berechtigungsumschaltung nicht die ursprüngliche Berechtigung gelten soll, die neu festgelegten Berechtigungen teilnehmerindividuell in einem weiteren Speicherabschnitt (B) enthalten sind und bei der Einwahl der vorgegebenen Kenninformation als für die gewünschte Gesprächsverbindung maßgebend ausgelesen werden.

## Claims

1. Method for a communication system, particularly for a private branch exchange system (NA) which is controlled by a processor (ZSt) which has access to memory sections (BT, VT) in which the program and control data information items are stored, in which method the class of service in the traffic options for a subscriber terminal (T1...Tn) can be restricted in each case for a particular period of time, characterized in that this restriction to a uniform lower class of service (2m) is effected by means of a centrally initiated control information item at the beginning of the relevant period of time, if necessary with individual few exceptions, for all remaining subscriber terminals and is cancelled again at the end of this period of time, in that the classes of service (1m) originally existing for these terminals are restored, at least for a single outgoing call to be set up, or, respectively, a class of service deviating from this original class of service and of higher value compared with the reduced class of service (2m) specified with the restriction effected is released therefor, by means of a code information item (Km) to be dialled in by a subscriber at the telephone terminal.

2. Method according to Claim 1, characterized in that a general code number applying equally to the relevant subscribers and/or a code number (Km) individually allocated to each subscriber and appropriately stored for the necessary comparison is used as code information.

3. Method according to Claim 1 or 2, characterized in that, after a predetermined number of calls, the classes of service (2m) selected with the central class-of-service switching remain even when the code information is dialled in.

4. Method according to Claim 1 or 2, characterized in that in the cases in which the original class of service is not to apply after the central class-of-service switching, the newly specified classes of service are contained subscriber-individually in a further memory section (B) and are read out as applicable to the desired call when the selected code information is dialled in.

## Revendications

1. Procédé pour un système de communication, notamment pour un système (NA) de centraux téléphoniques d'abonné, qui est commandé par un dispositif (ZSt) de commande , ayant accès à des zones (BT, VT), de mémoire dans lesquelles sont mémorisées les informations de programme et de commande, , une limitation pouvant être donnée pour une période déterminée à l'autorisation relative aux possibilités de trafic pour un équipement (T1 ... Tn) terminal d'abonné,
caractérisé en ce que
cette limitation à une autorisation plus petite uniforme (2m) agit, au moyen d'une information de commande fournie de manière centrale, au début de la période concernée, le cas échéant avec quelques exceptions individuelles, sur tous les autres équipements terminaux d'abonnés et on l'annule de nouveau à la fin de cette période, on rétablit par l'intermédiaire d'une information (Km) d'identification à sélectionner par un abonné dans l'équipement terminal téléphonique, les autorisations (1m) présentes à l'origine pour ces équipements terminaux, au moins pour une seule liaison de conversation à établir au départ, et on fournit pour ce faire une autorisation différente de cette autorisation d'origine et de valeur supérieure à l'autorisation réduite (2m) fixée avec la limitation effectuée.

2. Procédé selon la revendication 1,
caractérisée en ce que
en tant qu'information d'identification, on utilise un nombre caractéristique général déterminant de la même manière pour les abonnés concernés et/ou un nombre caractéristique (Km) attribué individuellement à chaque abonné et mémorisé en conséquence pour la comparaison nécessaire.

3. Procédé selon la revendication 1 ou 2,
caractérisé en ce que
après un nombre prescrit de liaisons de conversation, également en cas de sélection de l'information d'identification, les autorisations (2m) prescrites par la commutation d'autorisation centrale restent maintenues.

4. Procédé selon la revendication 1 ou 2, caractérisé en ce que,
dans les cas où l'autorisation d'origine ne doit pas être valable après la commutation d'autorisation centrale, les autorisations nouvellement établies sont contenues, pour chaque abonné, dans une autre zone (B) de mémoire et on les extrait, lors de la sélection de l'information d'identification prescrite, de manière déterminante pour la liaison de conversation souhaitée.
